# EUROPÄISCHE PATENTANMELDUNG

(11) **EP 2 995 782 A1**
(43) Veröffentlichungstag der Anmeldung: **16.03.2016**
(21) Anmeldenummer: 15183316.7
(22) Anmeldetag: 01.09.2015
(51) Int. Cl.: F01D 25/18, F02C 7/06, F16C 33/66

(54) **FLUGTRIEBWERK MIT EINER LAGERKAMMER UND EINER EINRICHTUNG ZUM EINLEITEN VON ÖL**

(30) Priorität: 11.09.2014 DE 102014113132
(71) Anmelder: Rolls-Royce Deutschland Ltd & Co KG, 15827 Blankenfelde-Mahlow (DE)
(72) Erfinder: Beier, Jürgen, 15732 Schulzendorf (DE)
(74) Vertreter: Schmidt, Martin Michael

(57) **Zusammenfassung**

Es wird ein Flugtriebwerk (1) mit einer Lagerkammer (12) vorgeschlagen, die von einem ersten Wandungsbereich (32) und einem gegenüber dem ersten Wandungsbereich (32) drehbar ausgeführten zweiten Wandungsbereich (33) begrenzt ist und in der wenigstens eine Lagereinrichtung sowie wenigstens eine Einrichtung (38, 39, 40) zum Einleiten von Öl angeordnet sind. Öl ist über wenigstens eine Einrichtung (38, 39, 40) zum Einleiten von Öl im Wesentlichen entgegen einer Drehrichtung des ersten Wandungsbereiches (32) und/oder des zweiten Wandungsbereiches (33) und im Wesentlichen tangential zu wenigstens einer der Lagerkammer (12) zugewandten Fläche (43) zumindest eines Wandungsbereiches (32, 33) in die Lagerkammer (12) einleitbar.

## Beschreibung

Die Erfindung betrifft ein Flugtriebwerk mit einer Lagerkammer, die von einem ersten Wandungsbereich und einem gegenüber dem ersten Wandungsbereich drehbar ausgeführten zweiten Wandungsbereich begrenzt ist und in der eine Lagereinrichtung sowie wenigstens eine Einrichtung zum Einleiten von Öl angeordnet sind.

Bei aus der Praxis bekannten Strahltriebwerken wird im Betrieb ölhaltige Verbrauchsluft unter anderem aus Lagerkammern einem Ölabscheider bzw. einem sogenannten Breather zugeführt, der als Zentrifugalölabscheider ausgeführt sein kann. Die Separierung großer Ölpartikel aus der Verbrauchsluft bzw. den Luft-Öl-Volumenströmen aus den Lagerkammern erfolgt über einen im Bereich des Breathers vorgesehenen und als Zentrifuge wirkenden Umlenkbereich. Ölpartikel mit kleineren Durchmessern werden durch einen im Ölabscheider angeordneten Metallschaum aufgefangen und so ebenfalls aus der Luft gefiltert. Das durch im Bereich des Ölabscheiders abgeschiedene Öl wird dem Ölkreislauf wieder zugeführt. Die gereinigte Luft wird über Bord an die Umwelt abgegeben.

Die dem Breather bzw. dem Zentrifugalölabscheider aus den Lagerkammern zugeführten Luft-Öl-Volumenströme sind stark ölhaltig, hoch temperiert und weisen Öltropfen mit sehr geringen Durchmessern auf. Die geringen Tropfendurchmesser entstehen beispielsweise dadurch, dass Öl aufgrund hoher Drehzahlen einer Triebwerkswelle im Betrieb des Gasturbinentriebwerks von einem im Bereich der Lagerkammer vorgesehenen und zur Schmierung mit Öl versorgten Lager in Richtung einer äußeren Wandung der Lagerkammer nach außen geschleudert wird. Beim Auftreffen des Öls auf die äußere Wandung dispergieren die vom Lager abgeschleuderten Öltropfen, wobei die dispergierten Öltropfen sehr kleine Durchmesser aufweisen.

Die aus den Lagerkammern abgeführten und die kleinen Öltropfen transportierenden Luft-Öl-Volumenströme werden dem Ölabscheider zugeführt. Die kleinen Öltropfen sind allerdings aufgrund ihrer geringen Größe im Bereich des Zentrifugalabscheiders nur bedingt abscheidbar, weshalb über einen Auslass des Ölabscheiders für den Luftstrom ein unerwünscht großer Anteil an Öl in die Umwelt gelangt, was unter anderem einen hohen Ölverbrauch heutiger Triebwerke verursacht.

Aus der US 2009/0133961 A1 ist ein Gasturbinentriebwerk mit einer ein Lager aufweisenden Lagerkammer bekannt. Ein aus der Lagerkammer ausgeleitetes Luft-Öl-Gemisch wird zu einem im Bereich einer Triebwerkswelle angeordneten Luft-Öl-Abscheider geführt, über den Öl aus dem Luft-Öl-Gemisch abtrennbar ist. Um das heiße Luft-Öl-Gemisch zu kühlen, wird über eine Düse kühles Öl in das Luft-Öl-Gemisch der Lagerkammer eingesprüht. Das anschließend dem Luft-Öl-Abscheider zugeführte und temperierte Luft-Öl-Gemisch weist bei der beschriebenen Ausführung nachteilhafterweise einen relativ großen Anteil von Öltropfen mit geringen Tropfendurchmessern auf, die wiederum im Bereich des Luft-Öl-Abscheiders nicht oder nicht in gewünschtem Umfang aus dem Luft-Öl-Gemisch abgeschieden werden können.

Es ist Aufgabe der vorliegenden Erfindung ein Flugtriebwerk der eingangs genannten Art zu schaffen, bei dem ein Anteil kleiner Öltropfen in einem aus der Lagerkammer abgeführten Luft-Öl-Gemisch gering ist.

Erfindungsgemäß wird diese Aufgabe mit einem Flugtriebwerk mit den Merkmalen des Patentanspruches 1 gelöst.

Das erfindungsgemäße Flugtriebwerk ist mit einer Lagerkammer ausgeführt, die von einem ersten Wandungsbereich und einem gegenüber dem ersten Wandungsbereich drehbar ausgeführten zweiten Wandungsbereich begrenzt ist und in der eine Lagereinrichtung sowie wenigstens eine Einrichtung zum Einleiten von Öl angeordnet sind.

Um den Anteil von sehr kleinen Öltropfen in einem aus der Lagerkammer abgeführten Luft-Öl-Gemisch gegenüber bekannten Ausführungen auf einfache und effiziente Weise zu reduzieren, ist Öl erfindungsgemäß über wenigstens eine Einrichtung zum Einleiten von Öl im Wesentlichen entgegen einer Drehrichtung des ersten Wandungsbereiches und/oder des zweiten Wandungsbereiches und im Wesentlichen tangential zu wenigstens einer der Lagerkammer zugewandten Fläche zumindest eines Wandungsbereiches in die Lagerkammer einleitbar.

Dadurch, dass das Öl in Umfangsrichtung des Triebwerks tangential zu dem Wandungsbereich der Lagerkammer und entgegen einer sich in Drehrichtung des Wandungsbereiches ausbildenden Hauptströmungsrichtung des Luft-Öl-Gemischs in die Lagerkammer eingeleitet wird, wird eine sehr große Relativgeschwindigkeit zwischen dem sich in der Lagerkammer bewegenden Luft-Öl-Gemisch und dem eingeleiteten und mit dem Öl in dem Luft-Öl-Gemisch zusammentreffenden Öl erzielt. Die hohe Relativgeschwindigkeit begünstigt bei einem Aufeinandertreffen der Öltropfen des Luft-Öl-Gemischs mit dem über die Einrichtung zum Einleiten von Öl in die Lagerkammer eingeleiteten Öl die Vereinigung zwischen dem eingeleiteten Öl und den Öltropfen des Luft-Öl-Gemischs zu Öltropfen mit Tropfengrößen, die im Bereich eines nachfolgenden Ölabscheiders in gewünschtem Umfang abscheidbar sind. Dabei kommt das über die Einrichtung eingeleitete Öl im Bereich der Lagerkammer sowohl mit Öltropfen, die von der Lagereinrichtung ohne Kontakt mit einem Wandungsbereich in die Lagerkammer geschleudert werden, als auch mit Öltropfen, die nach einem Kontakt mit einem Wandungsbereich der Lagerkammer in kleinere Öltropfen dispergiert werden, in Kontakt. Das Koaleszieren kleiner Öltropfen des Luft-Öl-Gemischs mit dem eingeleiteten Öl zu größeren Öltropfen kann auch dadurch begünstigt werden, dass das eingeleitete Öl eine gegenüber dem Luft-Öl-Gemisch deutlich geringere Temperatur aufweist.

Die durch das Koaleszieren vergrößerten Öltropfen sind beispielsweise durch einen Zyklon oder einen Luft-Öl-Abscheider einfach aus dem aus der Lagerkammer abgeführten Luft-Öl-Gemisch abtrennbar, so dass eine Beladung eines in Richtung einer Umgebung abströmenden Luft-Öl-Volumenstroms mit Öl gegenüber bekannten Ausführungen deutlich reduzierbar ist. Die Einrichtung zum Einleiten von Öl ist hierfür derart konfiguriert, dass durch das Einleiten von Öl in das Luft-Öl-Gemisch im Bereich der Lagerkammer aus den vorhandenen Öltropfen größere Öltropfen gebildet werden, die zu einem großen Anteil größer sind als Öltropfen, die aufgrund ihrer geringen Größe nicht oder nur mit hohem Aufwand aus dem aus der Lagerkammer abgeführten Luft-Öl-Gemisch abscheidbar sind.

Bei einer konstruktiv einfachen Ausführung des erfindungsgemäßen Flugtriebwerks bildet der erste Wandungsbereich eine im Betrieb des Flugtriebwerks drehfeste Außenwand und der zweite Wandungsbereich eine im Betrieb des Flugtriebwerks rotierende Innenwand der Lagerkammer.

Der erste Wandungsbereich und der zweite Wandungsbereich der Lagerkammer sind bei einer konstruktiv einfachen Weiterbildung der Erfindung über eine Lagereinrichtung drehbar miteinander verbunden.

Wenn Öl über die Einrichtung zum Einleiten von Öl zumindest in einen einem Wandungsbereich nahen Bereich der Lagerkammer einleitbar ist, kann die Anzahl von Öltropfen in einem aus der Lagerkammer abgeführten Luft-Öl-Gemisch mit einem sehr geringen Durchmesser stark reduziert werden. Durch eine Tropfen-Wand-Interaktion des im Betrieb des Flugtriebwerks von der Lagereinrichtung abgespritzten Öls entstehen insbesondere in wandnahen Bereichen der Außenwand der Lagerkammer Öltropfen mit einem sehr kleinen Durchmesser, beispielsweise kleiner 1 µm. Durch die Einleitung von Öl mittels der Einrichtung zum Einleiten von Öl in einen wandnahen Bereich des Wandungsbereiches kann eine große Anzahl derart kleiner Öltropfen direkt im Bereich ihrer Entstehung mit dem eingeleiteten Öl zu großen Öltropfen vereinigt werden, die anschließend wiederum auf einfache Weise aus dem aus der Lagerkammer abgeführten Luft-Öl-Gemisch abscheidbar sind. Die Einrichtung weist zum Einleiten von Öl in einen wandnahen Bereich vorzugsweise eine Auslassöffnung bzw. Austrittsöffnung für Öl auf, die in radialer Richtung von dem entsprechenden Wandungsbereich geringfügig radial beabstandet ist.

Das Öl ist über die Einrichtung zum Einleiten von Öl bei einer vorteilhaften Ausführung des erfindungsgemäßen Flugtriebwerks in Form eines Sprühkegels in die Lagerkammer einleitbar. Über den insbesondere lediglich geringfügig von einem Wandungsbereich beabstandeten und gegebenenfalls auch zumindest bereichsweise auf den Wandungsbereich auftreffenden Sprühkegel, der eine im Wesentlichen tangentiale Haupteinsprührichtung aufweist, wird auf einfache Weise ein Zusammentreffen von Öl der Einrichtung zum Einleiten von Öl mit einer großen Anzahl von kleinen Öltropfen nach einer Tropfen-Wand-Interaktion des von der Lagereinrichtung abgespritzten Öls erzielt, so dass ein großer Anteil der Öltropfen mit einem geringen Durchmesser mit dem eingeleiteten Öl zu gewünscht größeren Öltropfen koalesziert.

Bei einer besonders vorteilhaften Ausführung eines erfindungsgemäßen Flugtriebwerks ist es vorgesehen, dass das Öl über die Einrichtung zum Einleiten von Öl in Form eines elliptischen Sprühkegels, d. h. einem eine elliptische Grundfläche aufweisenden geraden Kegels, in die Lagerkammer einleitbar ist. Insbesondere wenn eine größere Halbachse des Sprühkegels im Wesentlichen in axialer Richtung der Lagerkammer verläuft, kann mit der Einrichtung zum Einleiten von Öl ein besonders großer wandnaher Bereich der Lagerkammer mit dem eingeleiteten Öl beaufschlagt und somit der Durchmesser vieler kleiner Öltropfen im Wandbereich vergrößert werden.

Die Einrichtung zum Einleiten von Öl kann im Bereich einer Ölaustrittsöffnung eine Ablenkeinrichtung zum Führen bzw. Umlenken des einzuleitenden Öls aufweisen. Bei einer derartigen Ausführung der Erfindung ist Öl besonders einfach in gewünschtem Umfang definiert in die Lagerkammer einleitbar.

Die Ablenkeinrichtung ist bei einer vorteilhaften Weiterbildung der Erfindung mit einem konvexen Bereich ausgeführt, wodurch eine gewünschte Verteilung des eingeleiteten Öls je nach Formgebung des konvexen Bereichs der Ablenkeinrichtung besonders einfach einstellbar ist. Der konvexe Bereich der Ablenkeinrichtung weist vorzugsweise eine konvexe Krümmung sowohl in radialer Richtung als auch in axialer Richtung der Lagerkammer auf und ist beispielsweise wenigstens annähernd zumindest bereichsweise löffelförmig ausgeführt. Öl wird durch die Einrichtung zum Einleiten von Öl hierbei beispielsweise in Bezug auf die Lagerkammer in radialer Richtung über einen Leitungsbereich in Richtung der Ablenkeinrichtung geführt und über die Ablenkeinrichtung vorzugsweise in Form eines Sprühkegels im Wesentlichen tangential zum Wandungsbereich abgelenkt.

Bei einer vorteilhaften Ausführung eines erfindungsgemäßen Flugtriebwerks weist die Einrichtung zum Einleiten von Öl eine ellipsenförmige Ölaustrittsöffnung auf, deren große Halbachse vorzugsweise im Wesentlichen tangential zu dem Wandungsbereich der Lagerkammer verläuft. Mit einer derartig ausgeführten Einrichtung zum Einleiten von Öl ist auf einfache Weise ein großer wandnaher Bereich innerhalb der Lagerkammer mit dem eingeleiteten Öl beaufschlagbar.

Grundsätzlich kann die Einrichtung zum Einleiten von Öl in Umfangsrichtung der Lagerkammer an einer beliebigen Position vorzugsweise im Bereich der Außenwand der Lagerkammer angeordnet sein. Besonders vorteilhaft ist allerdings die Anordnung einer Einrichtung zum Einleiten von Öl im Bereich einer Auslassöffnung für das Luft-Öl-Gemisch aus der Lagerkammer, da sämtliche aus der Lagerkammer strömenden Öltropfen die Auslassöffnung passieren. Die Einrichtung zum Einleiten von Öl kann auf einfache Weise in Umfangsrichtung der Lagerwand stromauf und/oder stromab der Auslassöffnung angeordnet sein.

Alternativ oder zusätzlich hierzu kann eine Einrichtung zum Einleiten von Öl im Bereich eines Ölauslasses aus der Lagerkammer angeordnet sein. Die Anordnung der Einrichtung zum Einleiten von Öl insbesondere stromab oder stromauf des Ölauslasses ist deshalb vorteilhaft, da in diesem Bereich besonders viele Öltropfen mit einem sehr geringen Tropfendurchmesser vorliegen können. Dies resultiert daraus, dass Öl in einem sich im Betrieb des Flugtriebwerks an der Außenwand der Lagerkammer ausbildenden Ölfilm durch die Absaugung von Öl aus der Lagerkammer in diesem Bereich sehr schnell bewegt wird und hierdurch ein Tropfenabriss an einer der Lagerkammer zugewandten Oberfläche des Ölfilms auftreten kann.

Bei einer vorteilhaften Ausführung der Erfindung sind mehrere, insbesondere zwei, drei, vier oder fünf Einrichtungen zum Einleiten von Öl vorgesehen, die jeweils über den Umfang eines Wandungsbereiches oder beider Wandungsbereiche der Lagerkammer verteilt und zueinander beabstandet angeordnet sind, aber auch in axialer Richtung der Lagerkammer zueinander versetzt angeordnet sein können. Je mehr Einrichtungen zum Einleiten von Öl vorgesehen sind, desto näher kann eine Auslass- bzw. Austrittsöffnung der Einrichtung zum Einleiten von Öl an dem entsprechenden Wandungsbereich angeordnet sein.

Durch die von den Einrichtungen zum Einleiten von Öl ausbildbaren Sprühkegel müssen im Betrieb des Flugtriebwerks allerdings je nach Ausführung nicht sämtliche umfangsseitigen Bereiche des Wandungsbereiches der Lagerkammer mit eingeleitetem Öl erreichbar sein. Dies ist beispielsweise bei Vorliegen von Bereichen der Fall, auf die aufgrund von Hinterschneidungen oder dergleichen kein von einer Lagereinrichtung abgeschleudertes Öl trifft und in deren Bereiche keine unerwünscht kleine Tropfen erzeugenden Tropfen-Wand-Interaktionen auftreten. Die Einrichtungen zum Einleiten von Öl werden vorzugsweise derart positioniert, dass sämtliche Bereiche, in denen im Betrieb des Flugtriebwerks eine Tropfen-Wand-Interaktion auftritt, von wenigstens einer Einrichtung zum Einleiten von Öl im Betrieb des Flugtriebwerks mit Öl erfassbar sind.

Um eine Beladung des über eine Auslassöffnung aus der Lagerkammer abgeführten Luft-Öl-Gemischs mit Öl vor einer Abgabe des Luft-Öl-Gemischs auf einfache Weise zu reduzieren, ist bei einer vorteilhaften Ausführung eines erfindungsgemäßen Flugtriebwerks stromab der Auslassöffnung für das Luft-Öl-Gemisch aus der Lagerkammer ein Ölabscheider und/oder ein Zyklon angeordnet.

Durch den Ölabscheider bzw. Breather und/oder den Zyklon ist die Beladung des Luft-Öl-Gemisch mit Öl aufgrund des großen Anteils an Öltropfen mit einem großen Durchmesser auf einfache Art und Weise mit geringem Aufwand reduzierbar. Dabei wird vorliegend unter einem Ölabscheider bzw. einem Breather insbesondere ein Zentrifugalölabscheider verstanden, der einen als Zentrifuge wirkenden Umlenkbereich aufweist. Im Bereich eines solchen Breathers werden Ölpartikel mit kleineren Durchmessern durch einen im Ölabscheider angeordneten Metallschaum aufgefangen und aus der Luft gefiltert. Das hier abgeschiedene Öl wird einem Öl-kreislauf eines Flugtriebwerks wieder zugeführt, während die gereinigte Luft vorzugsweise an die Umwelt eines Flugtriebwerks abgegeben wird.

Im Bereich des Zyklons bzw. des Fliehkraftabscheiders wird die Luft als Träger des Öls durch ihre eigene Strömungsgeschwindigkeit und entsprechende konstruktive Gestaltung des Zyklons in eine Drehbewegung versetzt. Die auf die Öltropfen wirkenden Zentrifugalkräfte beschleunigen die Öltropfen im Zyklon radial nach außen, die sich beim Auftreffen an einer Begrenzungswand bzw. einer Gehäusewand des Zyklons abscheiden. Die Öltropfen werden dadurch vom Luftstrom getrennt, der nach innen geleitet und abgeführt wird.

Die Einrichtung zur Einleitung von Öl kann beispielsweise als Nebeldüse ausgeführt sein, um beispielsweise einen kegelförmigen Ölsprühnebel bzw. einen diffusen Luft-Öl-Nebel in die Lagerkammer einleiten zu können. Der Ölsprühnebel besteht aus Tropfen, deren definierte Durchmesser ein Koaleszieren mit Öltropfen im Luft-Öl-Gemisch im Bereich der Lagerkammer begünstigen.

Grundsätzlich wird die Öl-Beladung des Luft-Öl-Gemischs innerhalb der Lagerkammer durch die wenigstens eine Einrichtung zum Einleiten von Öl gegenüber einer identischen Ausführung ohne eine Einrichtung zum Einleiten von Öl von einem ersten Niveau auf ein zweites Niveau angehoben. Mit der erfindungsgemäßen Lösung kann eine Ölbeladung stromab eines Ölabscheiders und/oder eines Zyklons aber auf einfache Weise auf ein Niveau abgesenkt werden, das kleiner ist als ein Beladungsniveau bei einem vergleichbaren Flugtriebwerk, bei dem im Bereich der Lagerkammer keine Einrichtung zum Einleiten von Öl vorgesehen ist.

Weitere Vorteile und vorteilhafte Ausführungsformen des erfindungsgemäßen Flugtriebwerks ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1: eine stark schematisierte Längsschnittansicht eines Flugtriebwerks, wobei zwei im Bereich einer vorderen Lagerkammer angeordnete Einrichtungen zum Einleiten von Öl in die Lagerkammer ersichtlich sind;
- Fig. 2: eine vereinfachte Längsschnittansicht des Flugtriebwerks gemäß Fig. 1 mit einer im Bereich eines Bläsergehäuses angeordnete Nebenaggregategetriebeeinrichtung;
- Fig. 3: eine stark schematisierte Teildarstellung des Flugtriebwerks gemäß Fig. 1 und Fig. 2 mit im Bereich der Nebenaggregategetriebeeinrichtung angeordnetem Ölabscheider;
- Fig. 4: eine stark vereinfachte Querschnittsdarstellung der vorderen Lagerkammer des Flugtriebwerks gemäß Fig. 1 bis Fig. 3, wobei drei Einrichtungen zum Einleiten von Öl ersichtlich sind;
- Fig. 5: einen stark vereinfachten Ausschnitt einer Schnittansicht der Lagerkammer gemäß Fig. 4 entlang der Linie V - V;
- Fig. 6: eine stark vereinfachte Darstellung eines Teils der Einrichtung zum Einleiten von Öl des Flugtriebwerks gemäß Fig. 1 bis Fig. 5 in Alleinstellung; und
- Fig. 7: eine stark vereinfachte dreidimensionale Ansicht eines Teils einer alternativ ausgeführten Einrichtung zum Einleiten von Öl.

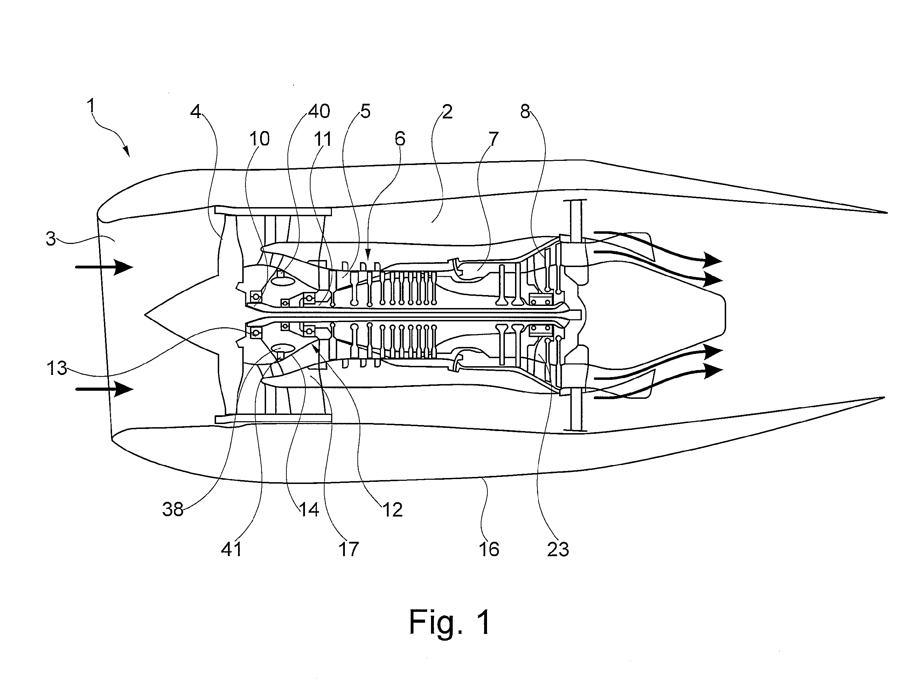

In Fig. 1 ist ein Flugtriebwerk bzw. Strahltriebwerk 1 in einer Längsschnittansicht gezeigt. Das Flugtriebwerk 1 ist mit einem Nebenstromkanal 2 und einem Einlaufbereich 3 ausgebildet, wobei sich an den Einlaufbereich 3 stromab ein Bläser 4 in an sich bekannter Art und Weise anschließt. Wiederum stromab des Bläsers 4 teilt sich der Fluidstrom im Flugtriebwerk 1 in einen Nebenstrom und einen Kernstrom auf, wobei der Nebenstrom durch den Nebenstromkanal 2 und der Kernstrom in einen Triebwerkskern 5 strömt, der wiederum in an sich bekannter Art und Weise mit einer Verdichtereinrichtung 6, einem Brenner 7 und einer Turbineneinrichtung 8 ausgeführt ist.

Das Flugtriebwerk 1 ist vorliegend zweiwellig mit einer Hochdruckwelle 9 und mit einer Niederdruckwelle 10 ausgeführt, wobei zur Lagerung der Wellen 9, 10 untereinander und gegenüber einem Triebwerksgehäuse 11 verschiedene Lagereinrichtungen vorgesehen sind, die jeweils in Lagerkammern 12 angeordnet sind. In der vorderen Lagerkammer 12 ist eine Lagereinrichtung 13 zur Lagerung der Niederdruckwelle 10 gegenüber einer im Betrieb drehfesten Gehäuseeinrichtung 14 gelagert. Grundsätzlich ist die erfindungsgemäße Lösung allerdings nicht auf die vordere Lagerkammer 12 beschränkt und kann in sämtlichen Lagerkammern des Flugtriebwerks 1 beispielsweise auch bei dreiwellig ausgeführten Flugtriebwerken eingesetzt werden.

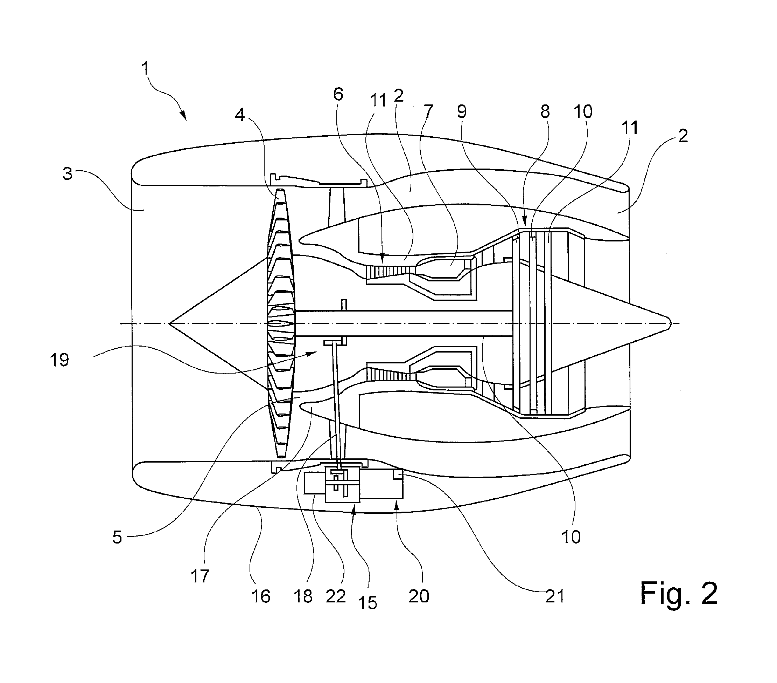

Fig. 2 zeigt wiederum eine Längsschnittansicht des Flugtriebwerks 1 in der im Gegensatz zu der Darstellung des Flugtriebwerks 1 gemäß Fig. 1 auch eine Nebenaggregategetriebeeinrichtung 15 gezeigt ist. Die Nebenaggregategetriebeeinrichtung 15 ist vorliegend im Bereich eines äußeren Triebwerksgehäuses 16 angeordnet, das den Nebenstromkanal 2 begrenzt und den äußeren Umfangsbereich des Flugtriebwerks 1 darstellt. Alternativ hierzu kann die Nebenaggregategetriebeeinrichtung bei einer weiteren Ausführung der Erfindung beispielsweise auch im Bereich eines in radialer Richtung zwischen dem Nebenstromkanal 2 und dem Triebwerkskern 5 in einem sowohl den Nebenstromkanal 2 als auch den Triebwerkskern 5 begrenzenden Bauteil 17 angeordnet sein. Die Nebenaggregategetriebeeinrichtung 15 ist vorliegend über eine in radialer Richtung des Flugtriebwerks 1 verlaufende Antriebswelle 18 über ein inneres Getriebe 19 mit der Niederdruckwelle 10 verbunden und wird somit von der Niederdruckwelle 10 im Betrieb des Stahltriebwerks 1 angetrieben bzw. mit Drehmoment versorgt.

Von der Nebenaggregategetriebeeinrichtung 15 werden verschiedene Nebenaggregate 20 und ein Ölabscheider 21, der auch als Breather bezeichnet wird, in gewünschtem Umfang mit Drehmoment beaufschlagt. Zusätzlich ist im Bereich der Nebenaggregategetriebeeinrichtung 15 auch ein Öltank 22 vorgesehen, der ein Hydraulikfluidreservoir darstellt, aus dem Öl zur Kühlung und Schmierung verschiedener Bereiche des Flugtriebwerks 1, wie der Lagereinrichtungen 13, Zahnradpaarungen des inneren Getriebes 19 und der Nebenaggregategetriebeeinrichtung 15 sowie weiterer zu kühlender und zu schmierender Baugruppen des Flugtriebwerks 1, entnommen wird.

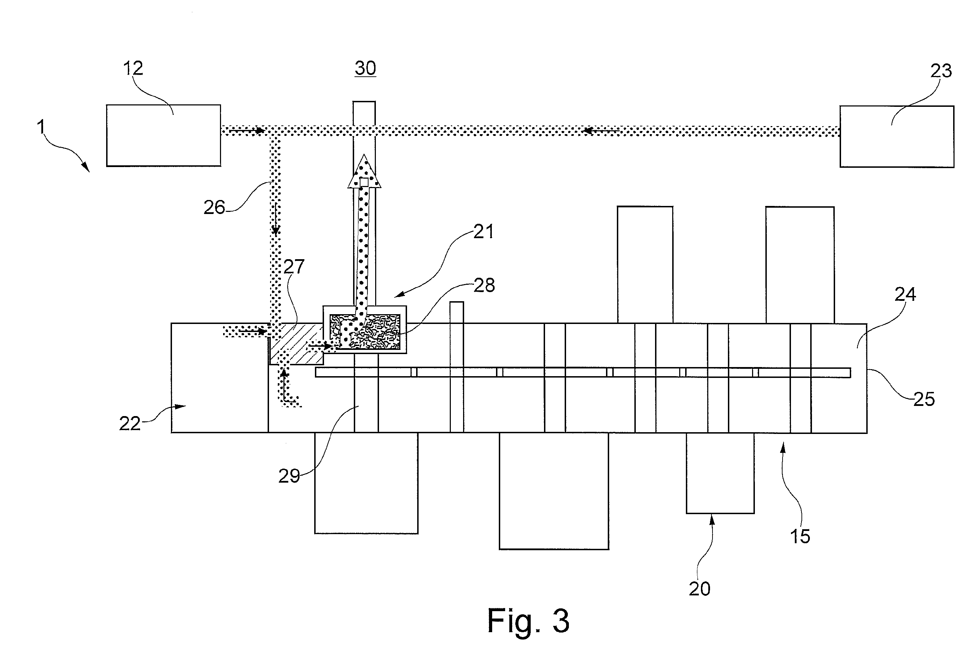

Fig. 3 zeigt den Teil des Flugtriebwerks 1 in stark schematisierter Form, in dem die Nebenaggregategetriebeeinrichtung 15 angeordnet ist. Der Ölabscheider 21 steht vorliegend mit dem Öltank 22, der vorderen Lagerkammer 12, einer hinteren Lagerkammer 23, sowie einem Innenraum 24 eines Gehäuses 25 der Nebenaggregategetriebeeinrichtung 15 in Verbindung, die alle mit Öl beaufschlagte Bereiche des Flugtriebwerks 1 darstellen. Die Lagerkammern 12, 23 werden im Betrieb des Flugtriebwerks 1 mit Öl aus dem Öltank 22 zum Schmieren und Kühlen beaufschlagt.

Bei der in Fig. 3 gezeigten Ausführungsform des Flugtriebwerks 1 sind jeweils ein Luft-Öl-Volumenstrom aus der vorderen Lagerkammer 12 und der hinteren Lagerkammer 23 in Richtung eines Leitungsbereichs 26 führbar, der vorliegend in eine dem Ölabscheider 21 vorgeschaltete Vorkammer 27 mündet. Des Weiteren ist auch der Öltank 22 vorliegend mit der Vorkammer 27 verbunden, um einen Luft-Öl-Volumenstrom aus dem Öltank 22 sowie die Luft-Öl-Volumenströme der Lagerkammern 12 und 23 über den Leitungsbereich 26 tangential in die Vorkammer 27 einleiten zu können. Darüber hinaus ist auch der Innenraum 24 des Gehäuses 25 der Nebenaggregategetriebeeinrichtung 15 mit der Vorkammer 27 gekoppelt, wobei bei einer entsprechenden Bedruckung des Innenraums 24 ebenfalls ein Luft-Öl-Volumenstrom aus dem Gehäuse 25 der Nebenaggregategetriebeeinrichtung 15 tangential in die Vorkammer 27 eingeleitet wird. Die Vorkammer 27 ist mit dem Ölabscheider 21 verbunden, in dessen Innenraum ein poröser Bereich 28 drehbar angeordnet ist, der von dem aus der Vorkammer 27 ausströmenden Luft-Öl-Volumenstrom durchströmbar ist.

Der poröse Bereich 28 ist vorliegend über ein Zahnrad 29 von der Nebenaggregategetriebeeinrichtung 15 antreibbar und wirkt als Zentrifuge, um den Anteil an Öl des durch den porösen Bereich 28 strömenden Luft-Öl-Volumenstroms soweit als möglich reduzieren zu können. Dabei wird der Ölanteil des Luft-Öl-Volumenstroms im Ölabscheider 21 im Bereich des porösen Bereichs 28 einerseits wie beim Durchströmen eines Prallfilters und andererseits wie im Bereich einer Zentrifuge durch die Rotation des porösen Bereichs 28 durch Abscheiden des Öles aus der Luft reduziert. Das im Bereich des porösen Bereichs 28 aus dem Luft-Öl-Volumenstrom ausgefilterte Öl wird im äußeren Bereich des Ölabscheiders 21 in nicht näher dargestellter Art und Weise über eine Pumpeneinrichtung abgesaugt und zurück in den Öltank 22 geführt. Der aus dem Ölabscheider 21 in Richtung der Umgebung 30 ausströmende Luftstrom weist eine sehr geringe Beladung an Öl auf, so dass im Betrieb des Flugtriebwerks 1 keine von außen sichtbare Rauchfahne entsteht.

Im Bereich des Ölabscheiders 21 können Öltropfen mit einem sehr kleinen Durchmesser im Bereich von etwa 1 µm nur in begrenztem Umfang abgeschieden werden. In den Lagerkammern 12, 23 wird im Betrieb des Flugtriebwerks 1 zur Schmierung zugeführtes Öl durch die Drehung der jeweiligen Welle 9, 10 von den Lagereinrichtungen 13 in Richtung eines äußeren Wandungsbereiches 32 der Lagerkammer 12, 23 geschleudert. Dabei entstehen Öltropfen mit kleinen Tropfendurchmessern. Die sich jeweils im Bereich der Lagerkammern 12, 23 einstellenden Tropfendurchmesser variieren in Abhängigkeit der Temperatur im Bereich der Lagerkammer 12, 23 und der Rotationsgeschwindigkeit der jeweiligen Welle 9, 10. Auch im Bereich einer Auslassöffnung 37 für das Luft-Öl-Gemisch aus der Lagerkammer 12, 23 können aufgrund der individuellen geometrischen Gestaltung Öltropfen mit geringem Durchmesser, vorzugsweise kleiner 1 µm, vorliegen. Im Folgenden wird näher beschrieben, wie ein Anteil von Öltropfen in aus den Lagerkammern 12, 23 ausgeführtem Luft-Öl-Gemisch gegenüber bekannten Ausführungen reduzierbar ist.

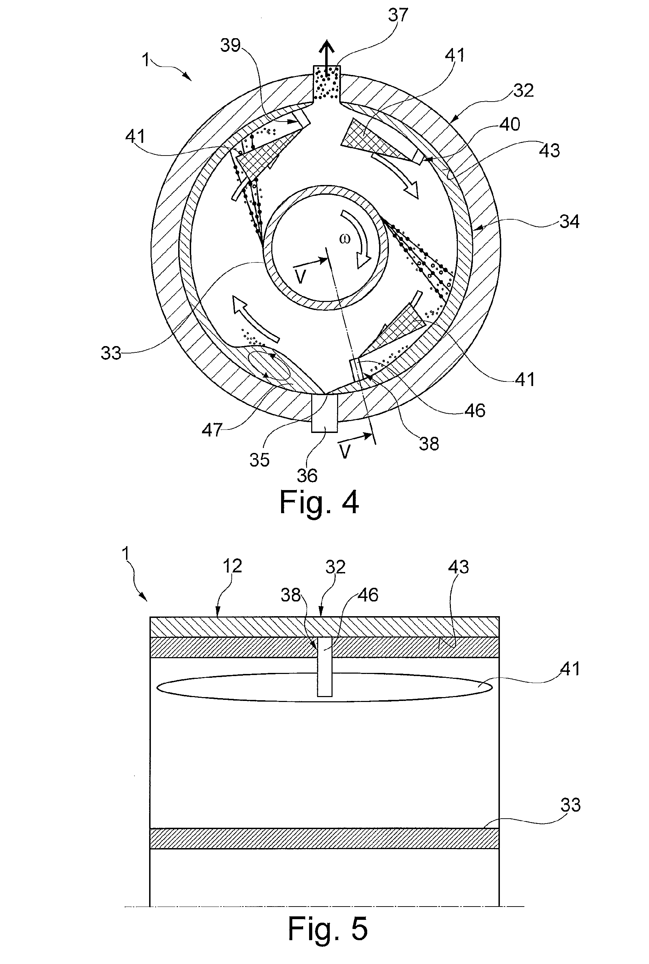

In Fig. 4 ist stark vereinfacht eine Schnittdarstellung durch die vordere Lagerkammer 12 des Flugtriebwerks 1 gezeigt, wobei die Lagerkammer 12 unter anderem von einem inneren Wandungsbereich 33 der Niederdruckwelle 10 und einem äußeren Wandungsbereich 32 begrenzt ist. Der innere Wandungsbereich 33 und der äußere Wandungsbereich 32 sind vorliegend über die Lagereinrichtung 13 miteinander verbunden, wobei der innere Wandungsbereich 33 im Betrieb des Flugtriebwerks 1 gegenüber dem drehfest gelagerten äußeren Wandungsbereich 32 rotiert.

Grundsätzlich bewegen sich die Öltropfen im Bereich der Lagerkammer 12 als Luft-Öl-Gemisch durch die Rotation des inneren Wandungsbereiches 33 mit einer Hauptströmungsrichtung, die im Wesentlichen der Drehrichtung des inneren Wandungsbereiches 33 entspricht. Im Bereich des äußeren Wandungsbereiches 32 bildet sich im Betrieb des Flugtriebwerks 1 ein insbesondere geschlossener Ölfilm 34, der im Bereich eines in einem unteren Bereich der Lagerkammer 12 angeordneten Ölauslasses 35 von einer Pumpeinrichtung 36 aus der Lagerkammer 12 abgesaugt und in Richtung des Öltanks 22 gefördert wird. Das im Bereich der Lagerkammer 12 vorhandene Luft-Öl-Gemisch strömt über eine in einem oberen Bereich der Lagerkammer 12 angeordnete Auslassöffnung 37 aus der Lagerkammer 12 und wird in oben näher beschriebener Weise zum Abscheiden von Öl aus dem Luft-Öl-Volumenstrom dem Ölabscheider 21 zugeführt.

Im Betrieb des Flugtriebwerks 1 wird über den gesamten Umfang des inneren Wandungsbereiches 33 verteilt Öl von der Lagereinrichtung 13 aufgrund der im Betrieb des Flugtriebwerks 1 großen Drehzahlen des inneren Wandungsbereiches 33 bzw. der Niederdruckwelle 10 in Richtung des äußeren Wandungsbereiches 32 geschleudert. In Fig. 4 ist dies exemplarisch ausgehend von zwei Bereichen des inneren Wandungsbereiches 33 gezeigt. Das von der Lagereinrichtung 13 abgeschleuderte Öl wird der Lagereinrichtung 13 zuvor über eine nicht näher ersichtliche Ölschmierung zugeführt.

Bereits das aus der Lagereinrichtung 13 austretende Schmieröl kann eine für den Ölabscheider 21 zu geringe Tropfengröße aufweisen. Zusätzlich hierzu werden bei einem Auftreffen der von der Lagereinrichtung 13 radial nach außen abgeschleuderten Öltropfen auf den äußeren Wandungsbereich 32 bzw. der Außenwand der Lagerkammer 12 in dem vorstehend näher erläuterten Umfang in kleinere Öltropfen aufgespalten, womit deren Durchmesser weiter reduziert wird.

Damit der Anteil der Öltropfen des aus der Lagerkammer 12 abgeführten Luft-Öl-Gemischs, deren Durchmesser eine Größe von kleiner etwa 1 µm beträgt, möglichst gering ist, sind im Bereich der Lagerkammer 12 vorliegend drei Einrichtungen 38, 39, 40 zum Einleiten von Öl vorgesehen. Die Einrichtungen 38, 39, 40 sind im Wesentlichen baugleich ausgeführt, so dass im Folgenden der konstruktive Aufbau und die Funktionsweise der Einrichtungen 38 bis 40 zugunsten der Übersichtlichkeit anhand der Einrichtung 38 beschrieben wird.

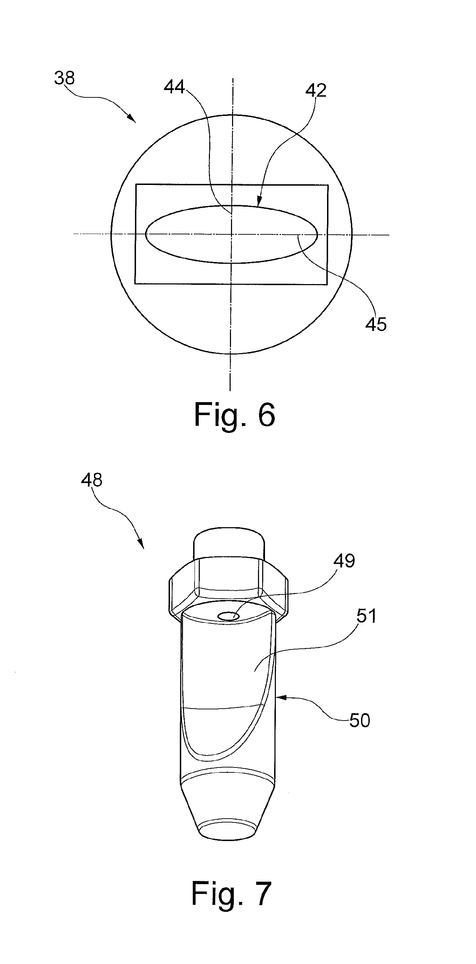

Mit der Einrichtung 38 ist Öl vorliegend in Form eines sowohl in Fig. 4 als auch in Fig. 5 gezeigten Sprühkegels 41 oder als kegelförmiger Ölfilm über eine in Fig. 6 näher ersichtliche Austrittsöffnung 42 der Einrichtung 38 in einem zu dem äußeren Wandungsbereich 32 nahen Bereich in die Lagerkammer 12 einleitbar, in der üblicherweise ein Druck von etwa 1,2 bar vorliegt. Um einen möglichst zielgerichteten Sprühkegel 41 ausbilden zu können, wird das Öl über die Einrichtung 38 zum Einleiten von Öl mit einem Druck von beispielsweise 3 bar bis 12 bar, insbesondere 4 bar bis 9 bar, in die Lagerkammer 12 eingeleitet. Dabei ist der über den Sprühkegel 41 mit Öl der Einrichtung 38 beaufschlagbare äußere Wandungsbereich 32 umso größer, je höher die Druckdifferenz zwischen dem Zuführdruck des über die Einrichtung 38 eingeleiteten Öls und dem Druck in der Lagerkammer 12 ist.

Die Austrittsöffnung 42 ist im Bereich eines in Fig. 5 dargestellten, sich im Wesentlichen in radialer Richtung erstreckenden Bereichs 46 der Einrichtung 38 angeordnet, wobei das über die Einrichtung 38 zu der Austrittsöffnung 42 geführte Öl vor Erreichen der Austrittsöffnung 42 vorliegend im Wesentlichen um 90° von einer radialen Richtung in eine im Wesentlichen tangentiale, entgegen einer Drehrichtung des inneren Wandungsbereiches 33 orientierte Richtung umgelenkt wird. Die Austrittsöffnung 42 der Einrichtung 38 ist dabei ellipsenförmig ausgeführt, so dass über die Einrichtung 38 ein elliptischer Sprühkegel, d. h. ein gerader Sprühkegel mit einer elliptischen Grundfläche, gebildet wird. Ein Öffnungswinkel des Sprühkegels 41 oder des kegelförmigen Ölfilms ist über die Austrittsöffnung 42 einstellbar. Die Austrittsöffnung 42 weist in der schematischen Darstellung gemäß Fig. 6 eine kleine erste, sich im Wesentlichen in radialer Richtung der Lagerkammer 12 erstreckende Halbachse 44 und eine vorzugsweise um ein Vielfaches größere zweite Halbachse 45 auf, die sich im Wesentlichen in axialer Richtung der Lagerkammer 12 erstreckt.

Über die Austrittsöffnung 42 der Einrichtung 38 kann auf einfache Weise ein Sprühkegel 41 erzeugt werden, mit dem ein großer Bereich des äußeren Wandungsbereiches 32 der Lagerkammer 12 mit Öl beaufschlagbar ist. Hierdurch wird eine große Anzahl von insbesondere durch eine Öltropfen-Wand-Interaktion entstehenden kleinen Öltropfen von dem über die Einrichtung 38 eingeleitetem Öl erfasst und koaleszieren mit diesem Öl zu größeren Öltropfen. Das Koaleszieren der Öltropfen des Luft-Öl-Volumenstroms und des eingeleiteten Öls wird durch die jeweils vorliegenden Anziehungskräfte zwischen den einzelnen Öltropfen begünstigt, wobei sich das Bestreben der Öltropfen, sich zu größeren Öltropfen zu vereinen, mit steigendem Verhältnis zwischen den Durchmessern der Öltropfen vergrößert.

Die Neigung der Öltropfen des über die Einrichtung 38 eingeleiteten bzw. eingesprühten Öls zum Koaleszieren mit den Öltropfen im Bereich der Lagerkammer 12 kann zusätzlich dadurch erhöht werden, dass das eingeleitete Öl eine gegenüber dem sich in der Lagerkammer 12 befindlichen Luft-Öl-Gemisch deutlich reduzierte Temperatur aufweist. Zudem wird die Vereinigung der Öltropfen des Luft-Öl-Gemischs der Lagerkammer 12 mit dem durch die Einrichtung 38 in die Lagerkammer 12 eingeleiteten Öls mit steigender Relativgeschwindigkeit zwischen dem Luft-Öl-Gemisch in der Lagerkammer 12 und dem von der Einrichtung 38 eingeleiteten Öl verbessert.

Die Einrichtung 38 zum Einleiten von Öl ist vorliegend bezüglich der Drehrichtung des inneren Wandungsbereiches 33 und bezüglich einer Umfangsrichtung der Lagerkammer 12 stromauf des Ölauslasses 35 in einem Nahbereich des Ölauslasses 35 angeordnet. In diesem Bereich liegen im Luft-Öl-Gemisch der Lagerkammer 12 vermehrt Öltropfen mit einem sehr kleinen Durchmesser vor, da der Ölfilm 34 in diesem Bereich mit einer großen Geschwindigkeit in Richtung des Ölablasses 35 gesaugt wird und sich in dem Luft-Öl-Gemisch neben den kleinen Öltropfen, die durch die Tropfen-Wand-Interaktion entstehen, auch Öltropfen mit geringen Durchmessern vorhanden sind, die vom Saugunterdruck sich aus der Oberfläche des Ölfilm 34 lösen und schwer aus dem Luft-Öl-Gemisch der Lagerkammer 12 abscheidbar sind. Durch das vorbeschriebene Einleiten von Öl über die Einrichtung 38 koaleszieren die kleinen Öltropfen des Luft-Öl-Gemischs in diesem Bereich mit dem von der Einrichtung 38 eingesprühten Öl zu größeren Öltropfen, die mit geringerem Aufwand im Bereich des Ölabscheiders 21 abscheidbar sind.

Bezüglich der Drehrichtung des inneren Wandungsbereiches 33 stromauf des Ölauslasses 35 bildet sich aufgrund der Strömungsverhältnisse im Ölfilm 34 eine sogenannte Rezirkulationszone 47, in dessen Bereich der Ölfilm 34 eine größere Filmdicke in radialer Richtung der Lagerkammer 12 aufweist. In einem Übergang zwischen der Rezirkulationszone 47 und einem Bereich mit einer in radialer Richtung der Lagerkammer 12 reduzierter Filmdicke des Ölfilms 34 begünstigen dynamische Verhältnisse eine Ablösung von Öltropfen aus dem Ölfilm 34. Daher kann es vorteilhaft sein, auch in einem solchen Übergangsbereich des Ölfilms 34 eine in Fig. 4 nicht näher dargestellte Einrichtung zum Einleiten von Öl vorzusehen, über deren Sprühkegel vorzugsweise der Bereich der Ablösung der Öltropfen aus der Rezirkulationszone 47 mit Öl beaufschlagbar ist, um auch die Durchmesser von nahe des Übergangsbereiches vorliegenden Öltropfen, die einen für die Abscheidung im Ölabscheider 21 kritischen Durchmesser aufweisen, in einem eine Abscheidung im Bereich des Ölabscheiders verbessernden Umfang zu erhöhen.

Die weitere Einrichtung 39 zum Einleiten von Öl ist vorliegend bezüglich der Drehrichtung des inneren Wandungsbereiches 33 stromauf der Auslassöffnung 37 und nahe der Auslassöffnung 37 für das Luft-Öl-Gemisch aus der Lagerkammer 12 angeordnet, während die Einrichtung 40 zum Einleiten von Öl vorliegend bezüglich der Drehrichtung des inneren Wandungsbereiches 33 stromab der Auslassöffnung 37 angeordnet ist. Durch die Anordnung der Einrichtung 40 wird durch das über die Einrichtung 40 eingesprühte Öl ein Druck innerhalb der Lagerkammer 12 nicht nachteilhaft beeinträchtigt.

Über die Einrichtungen 38 bis 40 in die Lagerkammer 12 eingeleitetes Öl ist ein Großteil des durch die Auslassöffnung 37 aus der Lagerkammer 12 ausströmenden Luft-Öl-Gemischs vor dem Austritt aus der Lagerkammer 12 mit Öl beaufschlagbar, um im Luft-Öl-Gemisch im Bereich der Lagerkammer 12 eine für eine anschließende Ölabscheidung günstige Öltropfendurchmesserverteilung zu erzielen. Dabei wird eine Verteilung angestrebt, die nur einen geringen Anteil an Öltropfen aufweist, die aufgrund ihres Durchmessers von dem Ölabscheider 21 nicht oder nur unzureichend abscheidbar sind.

Neben der dargestellten Ausführung mit drei Einrichtungen 38, 39, 40 können im Bereich der Lagerkammer 12 prinzipiell auch nur eine oder zwei Einrichtungen zum Einleiten von Öl vorgesehen sein. Ebenso ist es auch möglich, beliebig viele zusätzliche Einrichtungen zum Einleiten von Öl vorzusehen, wobei grundsätzlich festzustellen ist, dass je mehr Einrichtungen zum Einleiten von Öl vorgesehen sind, der jeweils von den Einrichtungen 38 bis 40 erzeugte Sprühkegel mit geringerem Abstand zum jeweils zugeordneten Bereich des äußeren Wandungsbereiches angeordnet sein kann und dennoch ein Großteil der durch die Tropfen-Wand-Interaktion entstehenden kleinen Öltropfen in den wandnahen Bereichen mit dem eingesprühten Öl zu größeren Öltropfen koalesziert.

Fig. 7 zeigt neben der bereits beschriebenen Ausführung der Einrichtung 38 zum Einleiten von Öl mit der ellipsenförmigen Austrittsöffnung 42 eine weitere Einrichtung 48 zum Einleiten von Öl in die Lagerkammer 12. Mittels der Einrichtung 48 gemäß Fig. 7 wird Öl im Bereich der Einrichtung 48 zunächst im Wesentlichen in radialer Richtung geführt und trifft nach einem Durchströmen einer hier kreisförmigen Ölaustrittsöffnung 49 auf eine Ablenkeinrichtung 50. Im Bereich eines hier beispielhaft löffelförmig ausgeführten Bereichs 51 der Ablenkeinrichtung 50 wird das Öl umgelenkt. Der Bereich 51 der Ablenkeinrichtung 50 weist vorliegend sowohl in radialer Richtung als auch in axialer Richtung der Lagerkammer 12 eine Krümmung auf. Die beispielsweise in der Form eines Kreisausschnitts oder eines Ausschnitts einer Ellipse ausgeführten Krümmungen des Bereichs 51 der Ablenkeinrichtung 50 in axialer bzw. radialer Richtung der Lagerkammer 12 sind derart gewählt, dass das Öl durch die Ablenkung im Bereich der Ablenkeinrichtung 50 in Form eines Sprühkegels in die Lagerkammer 12 eingeleitet wird, der im Wesentlichen dem Sprühkegel 41 entspricht.

Über die gewählte Form der Krümmung des Bereichs 51 der Ablenkeinrichtung in radialer Richtung der Lagerkammer 12 ist ein Öffnungswinkel des Sprühkegels des über die Einrichtung 48 eingeleiteten Öls in im Wesentlichen radialer Richtung der Lagerkammer 12 einstellbar, wohingegen über eine Form der Krümmung des Bereichs 51 der Ablenkeinrichtung 50 in axialer Richtung der Lagerkammer 12 ein Öffnungswinkel des Sprühkegels des über die Einrichtung 48 eingeleiteten Öls in im Wesentlichen axialer Richtung der Lagerkammer 12 einstellbar ist.

### Bezugszeichenliste

- 1: Flugtriebwerk, Strahltriebwerk
- 2: Nebenstromkanal
- 3: Einlaufbereich
- 4: Bläser
- 5: Triebwerkskern
- 6: Verdichtereinrichtung
- 7: Brenner
- 8: Turbineneinrichtung
- 9: Hochdruckwelle
- 10: Niederdruckwelle
- 11: Triebwerksgehäuse
- 12: vordere Lagerkammer
- 13: Lagereinrichtung
- 14: Gehäuseeinrichtung
- 15: Nebenaggregategetriebeeinrichtung
- 16: äußeres Triebwerksgehäuse
- 17: Bauteil
- 18: Antriebswelle
- 19: inneres Getriebe
- 20: Nebenaggregate
- 21: Ölabscheider
- 22: Öltank
- 23: hintere Lagerkammer
- 24: Innenraum der Nebenaggregategetriebeeinrichtung
- 25: Gehäuse der Nebenaggregategetriebeeinrichtung
- 26: Leitungsbereich
- 27: Vorkammer
- 28: poröser Bereich des Ölabscheiders
- 29: Zahnrad der Nebenaggregategetriebeeinrichtung
- 30: Umgebung
- 32: äußerer Wandungsbereich der Lagerkammer
- 33: innerer Wandungsbereich der Lagerkammer
- 34: Ölfilm
- 35: Ölauslass
- 36: Pumpeneinrichtung
- 37: Auslassöffnung
- 38: Einrichtung zum Einleiten von Öl
- 39: Einrichtung zum Einleiten von Öl
- 40: Einrichtung zum Einleiten von Öl
- 41: Sprühkegel
- 42: Austrittsöffnung der Einrichtung zum Einleiten von Öl
- 43: Fläche des äußeren Wandungsbereiches
- 44: erste Halbachse der Austrittsöffnung
- 45: zweite Halbachse der Austrittsöffnung
- 46: Bereich der Einrichtung
- 47: Rezirkulationszone
- 48: Einrichtung zum Einleiten von Öl
- 49: Ölaustrittsöffnung
- 50: Ablenkeinrichtung
- 51: Bereich der Ablenkeinrichtung

## Patentansprüche

1. Flugtriebwerk (1) mit einer Lagerkammer (12, 23), die von einem ersten Wandungsbereich (32) und einem gegenüber dem ersten Wandungsbereich (32) drehbar ausgeführten zweiten Wandungsbereich (33) begrenzt ist und in der wenigstens eine Lagereinrichtung (13) sowie wenigstens eine Einrichtung (38, 39, 40, 48) zum Einleiten von Öl angeordnet sind, **dadurch gekennzeichnet, dass** Öl über wenigstens eine Einrichtung (38, 39, 40, 48) zum Einleiten von Öl im Wesentlichen entgegen einer Drehrichtung des ersten Wandungsbereiches (32) und/oder des zweiten Wandungsbereiches (33) und im Wesentlichen tangential zu wenigstens einer der Lagerkammer (12, 23) zugewandten Fläche (43) zumindest eines Wandungsbereiches (32, 33) in die Lagerkammer (12, 23) einleitbar ist.

2. Flugtriebwerk nach Anspruch 1, **dadurch gekennzeichnet, dass** der erste Wandungsbereich (32) eine im Betrieb des Flugtriebwerks (1) drehfeste Außenwand und der zweite Wandungsbereich (33) eine im Betrieb des Flugtriebwerks (1) rotierende Innenwand der Lagerkammer (12, 23) bilden.

3. Flugtriebwerk nach einem der Ansprüche 1 oder 2, **dadurch gekennzeichnet, dass** der erste Wandungsbereich (32) und der zweite Wandungsbereich (33) der Lagerkammer (12, 23) über eine Lagereinrichtung (13) drehbar miteinander verbunden sind.

4. Flugtriebwerk nach einem der Ansprüche 1 bis 3, **dadurch gekennzeichnet, dass** Öl über die Einrichtung (38, 39, 40, 48) zum Einleiten von Öl zumindest in einen dem Wandungsbereich (32, 33) nahen Bereich der Lagerkammer (12, 23) einleitbar ist.

5. Flugtriebwerk nach einem der Ansprüche 1 bis 4, **dadurch gekennzeichnet, dass** das Öl über die Einrichtung (38, 39, 40, 48) zum Einleiten von Öl in Form eines Sprühkegels (41) in die Lagerkammer (12, 23) einleitbar ist.

6. Flugtriebwerk nach einem der Ansprüche 1 bis 5, **dadurch gekennzeichnet, dass** das Öl über die Einrichtung (38, 39, 40, 48) zum Einleiten von Öl in Form eines elliptischen Sprühkegels (41) in die Lagerkammer (12, 23) einleitbar ist.

7. Flugtriebwerk nach einem der Ansprüche 1 bis 6, **dadurch gekennzeichnet, dass** die Einrichtung (48) zum Einleiten von Öl im Bereich einer Ölaustrittsöffnung (49) eine Ablenkeinrichtung (50) aufweist.

8. Flugtriebwerk nach Anspruch 7, **dadurch gekennzeichnet, dass** die Ablenkeinrichtung (50) mit einem konvexen Bereich (51) ausgeführt ist.

9. Flugtriebwerk nach einem der Ansprüche 1 bis 8, **dadurch gekennzeichnet, dass** die Einrichtung (38, 39, 40) zum Einleiten von Öl eine ellipsenförmige Ölaustrittsöffnung (42) aufweist.

10. Flugtriebwerk nach einem der Ansprüche 1 bis 9, **dadurch gekennzeichnet, dass** die Einrichtung (38, 39, 40, 48) zum Einleiten von Öl im Bereich einer Auslassöffnung (37) für das Luft-Öl-Gemisch aus der Lagerkammer (12, 23) angeordnet ist.

11. Flugtriebwerk nach einem der Ansprüche 1 bis 10, **dadurch gekennzeichnet, dass** die Einrichtung (38, 39, 40, 48) zum Einleiten von Öl im Bereich eines Ölauslasses (35) aus der Lagerkammer (12, 23) angeordnet ist.

12. Flugtriebwerk nach einem der Ansprüche 1 bis 11, **dadurch gekennzeichnet, dass** mehrere, insbesondere zwei, drei, vier oder fünf Einrichtungen (38, 39, 40, 48) zum Einleiten von Öl vorgesehen sind, die jeweils über den Umfang eines Wandungsbereiches (32, 33) der Lagerkammer (12, 23) verteilt angeordnet sind.

13. Flugtriebwerk nach einem der Ansprüche 1 bis 12, **dadurch gekennzeichnet, dass** stromab einer Auslassöffnung (37) für das Luft-Öl-Gemisch aus der Lagerkammer (12, 23) ein Ölabscheider (21) und/oder ein Zyklon angeordnet ist.
